# EUROPÄISCHE PATENTSCHRIFT

(11) **EP 0 662 455 B1**
(45) Veröffentlichungstag und Bekanntmachung des Hinweises auf die Patenterteilung: **01.08.2001**
(21) Anmeldenummer: 94118950.8
(22) Anmeldetag: 01.12.1994
(51) Int. Cl.: C03B 29/06, C03B 27/06, C03B 25/06

(54) **Verfahren zur Erhöhung der Festigkeit von Glaskörpern und Vorrichtung hierfür**
Method for increasing the resistance of glass bodies and apparatus therefor
Procédé d'augmentation de la résistance de corps en verre et appareil pour appliquer ledit procédé

(30) Priorität: 11.01.1994 DE 4400542
(43) Veröffentlichungstag der Anmeldung: 12.07.1995
(73) Patentinhaber: Rastal GmbH & Co. KG, D-56194 Höhr-Grenzhausen (DE)
(72) Erfinder: Hermann, Günter, D-56598 Rheinbrohl (DE); Heinz, Wolfgang, D-56566 Neuwied (DE)
(74) Vertreter: Weber, Dieter, Dr.

(56) Entgegenhaltungen:
- EP-A- 0 152 163
- DE-A- 1 596 365
- DE-A- 1 812 509
- DE-B- 1 063 351
- DE-B- 1 252 855
- US-A- 3 510 324
- US-A- 3 809 544

## Beschreibung

Die Erfindung betrifft ein Verfahren zur Erhöhung der Festigkeit von Glaskörpern, die erwärmt und danach abgekühlt werden. Ferner betrifft die Erfindung eine Vorrichtung dieser Art, mit einem durch einen länglichen Brennofen geführten Transportband, mit wenigstens drei hintereinander angeordneten Heizzonen und anschließend hintereinander angeordneten Kühlzonen, mit Einrichtungen für die Zufuhr von Heizluft und von Kühlluft und mit Abluftanschlüssen.

Es ist bekannt, Gläser und insbesondere Hohlgläser mit ritz- und kratzfest eingebranntem Dekor dadurch zu versehen, daß beispielsweise ein Trinkglas mit einem Abziehbild oder im direkten Siebdruck mit keramischen Farben dekoriert und in einen Dekoreinbrennofen eingeführt wird. Ein derartiger länglicher Ofen hat mehrere Heiz- und Kühlzonen hintereinander angeordnet, und der betreffende Glaskörper wird auf einem Transportband kontinuierlich durch die verschiedenen Heizzonen derart hindurchgefördert, daß die Temperatur langsam ansteigt, bis die keramischen Farben aufgeschmolzen sind, und dann allmählich auf Raumtemperatur abgesenkt wird.

Man hat auch schon versucht, die Festigkeit von Hohlgläsern chemisch oder thermisch zu verbessern, auch um die Gefahr des Glasbruches zu verringern. Bei dem thermischen Verfahren hat man das fertiggestellte Hohlglas am Ende anderer Behandlungsverfahren erwärmt und abgekühlt und dadurch die mechanische und thermische Festigkeit erhöht. Solche Verfahren sind aber wirtschaftlich aufwendig, weil die gesamte Energie für die Behandlung erneut und in separaten Behandlungsöfen aufgebracht werden muß.

Aus dem Dokument US-A-3,809,544 ist ein Verfahren zum Erwärmen, Abkühlen, Dekorieren und Beschichten von Glaskörpern bekannt. Es soll durch diese Wärmebehandlung die Produktionszeit einer Glasherstellungsmaschine nicht beeinträchtigt und insbesondere nicht verlangsamt werden. Stattdessen sind Maßnahmen für diese bekannte Verfahren vorgeschlagen worden, um die Zeit zum Erwärmen der Glaskörper zu reduzieren, wobei auch eine gleichmäßige Temperatur innerhalb und außerhalb der zu behandelnden Glaskörper vorgesehen wird. Nach den dort vorgeschlagenen Maßnahmen sollen Flaschenherstellungsmaschinen mit hoher Kapazität betrieben werden können, ohne daß man die Produkte zwischenspeichern muß. Um größere Betriebsgeschwindigkeiten zu erreichen, werden besondere Heizeinrichtungen in einem tunnelförmigen Ofen verwendet, um erwärmte Gase, zum Beispiel Luft, um die Flaschen und in die Gaskörper hinein zu führen. Bei einer Behandlungsvorrichtung hat man eine Kühlzone vorgesehen.

Aus dem Dokument EP-A-0 152 163 ist ein Verfahren für die Wärmebehandlung von Glaskörpern bekannt. Danach werden produzierte Gläser am Ende einer Glasherstellungsmaschine bei einer Temperatur von etwa 550°C einem Kühlofen zugeführt. Die nicht dekorierten Gläser werden dann auf Entspannungstemperatur erwärmt und danach abgekühlt. Zielrichtung des in diesem Dokument beschriebenen Verfahrens ist die Einsparung von Wärmeenergie. Diese Einsparung gelingt im bekannten Fall durch Umwälzen von Luft in einzelnen Zonen und durch Fördern von Luftströmen von einer Zone in die andere. Ein Tempern der Glaskörper kann mit diesem bekannten Verfahren nicht erreicht werden.

Weiterhin beschreibt das Dokument US-A-3,510,324 die Zusammensetzung einer Glasur auf keramischen Körpern. Keramik hat zusätzliche und andere Zuschlagstoffe als Glas und folglich andere physikalische Eigenschaften als Glas. Wenn in dem Dokument eine über der Zeit aufgetragene Temperaturkurve dargestellt wird, dann stellt diese deutlich auf Keramik ab und kann nicht einfach verwendet werden, um einen Brennofen zur Erhöhung der Festigkeit von Glaskörpern zu betreiben. Der Fachmann entnimmt dem Dokument eher Maßnahmen, wie eine gute Glasur herzustellen und auf einen Keramikartikel aufzubringen ist und so eingebrannt werden kann, daß keine schädlichen Rißbildungen oder Spannungen in der Glasur entstehen. Der Fachmann kann nicht erkennen, wie ein Glaskörper mit aufgebrachtem Dekor gute mechanische und thermische Festigkeit erhält und wie gegenüber dem bekannten Verfahren Energie eingespart werden soll, zumal die Keramikkörper bereits mit verhältnismäßig hoher, kontinuierlicher Geschwindigkeit durch direkte Berührung mit Glasflammen erhitzt werden.

Mit der in dem Ausführungsbeispiel beschriebenen Driftsteuerklappe kann der Übergang der Wärme aus der Heizzone in die Kühlzone nicht verhindert werden.

Der Erfindung liegt die Aufgabe zugrunde, die bekannten Behandlungsverfahren für Glaskörper so weiter zu entwickeln, daß ein Verfahren zur Erhöhung der mechanischen und thermischen Festigkeit geschaffen wird, welches in Verbindung mit dem Einbrennen eines Dekors energie-, raum- und zeitsparend angewandt werden kann.

Diese Aufgabe wird erfindungsgemäß für das Verfahren dadurch gelöst, daß der jeweilige Glaskörper mit aufgebrachtem Dekor intermittierend in wenigstens drei Stufen auf eine über der Enspannungstemperatur T_{g} liegende Temperatur von zwischen 550°C bis 650°C erwärmt wird, so daß die Keramikfarbe oder Siebdruckfarbe des Dekors homogen mit dem Glas verbunden ist und das Glas vorzugsweise im wesentlichen spannungsfrei ist, und der Glaskörper danach auf einer Stufe um eine Temperaturdifferenz aus dem Bereich von 200°C bis 600°C, vorzugsweise von 300°C bis 500°C und besonders bevorzugt von 420°C bis 480°C derart abgekühlt wird, daß die Temperatur des Glaskörpers nach der Abkühlung jedenfalls unter der Entspannungstemperatur T_{g} liegt, wobei die Abkühlung als Thermoschock innerhalb höchstens 30 Minuten, vorzugsweise binnen höchstens 20 Minuten erfolgt und wobei die Erwärmungstemperatur und die Temperaturdifferenz so aufeinander abgestimmt werden, daß eine Erhöhung der Festigkeit erfolgt. Mit dem neuen Verfahren kann man Hohlgläser, z.B. Trinkgläser in Becherform oder Kelchform und auch andere Glasarten so behandeln, daß gleichzeitig das Dekor eingebrannt und die Festigkeit des behandelten Glaskörpers erhöht wird. Durch die Kombination des Einbrennens des Dekors und der thermischen Behandlung für die Festigkeitserhöhung ist ein energiesparendes Verfahren geschaffen worden, welches die Herstellung der entsprechenden Glaskörper in zeitsparender Weise mittels Maschineneinrichtungen erlaubt, die verhältnismäßig wenig Raum benötigen, denn in ein und derselben Anlage können beide Behandlungen vorgenommen werden, das Einbrennen des Dekors und die Erhöhung der mechanischen und thermischen Festigkeit des Glases.

Durch diese verhältnismäßig schnelle Absenkung der Temperatur wird das Glas einem die Festigkeit steigernden Prozeß unterzogen. Man hat sich vorgestellt, daß der Druckspannungsaufbau an der Glasoberfläche nur dann erreicht werden kann, wenn vorher das Glas gut entspannt wurde. Durch das Erhitzen des jeweiligen Glaskörpers in wenigstens drei Stufen bzw. Heizzonen erfolgt eine gleichmäßige und intensive Durchwärmung des Glases, welches damit gut entspannt wird. Den Vorgang der Erhöhung der mechanischen und thermischen Festigkeit des Glases stellt man sich so vor, daß sich die innere Glasmasse, die sich noch auf einer hohen Temperatur befindet, bei dem thermoschockartigen Abkühlen zusammenziehen will. Sie wird aber durch den Abkühlvorgang daran gehindert, und dadurch entsteht in der Glaswandung ein Spannungsgefälle, insbesondere eine die Festigkeit erhöhende Druckspannung außen und eine Zugspannung im inneren des Glases. Damit steigt mit Vorteil bei Anwendung des erfindungsgemäßen Verfahrens die mechanische Stoß- und Schlagbelastung sowie die Temperaturwechselbeständigkeit des betreffenden Glaskörpers, zum Beispiel eines Gebrauchsglases.

Vortreilhaft ist es dabei, wenn erfindungsgemäß die Glaskörper gruppenweise, in Förderrichtung mit Abständen zwischen den Gruppen, mit einer Geschwindigkeit von 20 cm pro Minute bis 120 cm pro Minute, vorzugsweise von 40 cm pro Minute und 80 cm pro Minute, durch Heiz- und Kühlzonen gefördert werden. Diese relativ hohe Fördergeschwindigkeit des jeweiligen Glaskörpers sorgt für das Einsparen von Zeit, Energie und Raum im Verlaufe der Behandlung des Glases durch das erfindungsgemäße Verfahren, während das Einsetzen der Glaskörper in beabstandete Gruppen auf dem Transportband die Möglichkeit vorgibt, daß man jede Gruppe bzw. jedes Paket von Glaskörpern separat von dem benachbarten behandeln kann. Es ist also möglich Trennklappen oder andere Maßnahmen so vorzusehen, daß in zwei benachbarten Heizzonen unterschiedliche Temperaturen auf das Fördergut einwirken oder die Grenze zwischen einer Heizzone und einer Kühlzone so ausgebildet werden kann, daß zum Beispiel die Abkühlung in kurzer Zeit als Thermoschock auf das Fördergut einwirkt.

Dabei Ist es besonders zweckmäßig, wenn erfindungsgemäß der jeweilige Glaskörper in sechs aufeinanderfolgenden Heizzonen, vorzugsweise durch Heißluft, auf etwa 600°C erwärmt, in einer Hauptkühlzone auf 120°C bis 150°C in etwa 15 Minuten und in fünf weiteren Kühlzonen, vorzugeweise durch Kühlluft, allmählich auf etwa Raumtemparatur abgekühlt wird. Es hat sich als günstig erwiesen, sowohl in den Heizzonen als auch in sämtlichen Kühlzonen Luft mit der erforderlichen Temperatur zur Behandlung des Glaskörpers einzusetzen. Als Kühlluft kann man vorteilhaft solche mit Raumtemparatur einsetzten, und geheitzt wird die Luft durch Brenner, deren Flammen mit den Glaskörpern nicht in Berührung kommen. Vielmehr wird die Luft durch mehr oder weniger direkten Kontakt mit den Flammen von Brennern oder durch heiße Glaskörper erwärmt und umstreicht dann die zu erwärmenden Glaskörper, welche danach und auf diese Weise sehr durchgreifend auf die gewünschte Endtemparatur gebracht werden. Sehr energiesparend ist es dabei z.B, wenn Kaltluft am verhältnismäßig kühlen ablaufseitigen Ende des Einbrennofens eingeführt und entgegen der Transportrichtung der Glaskörper durch den Brennofen hindurchgedrückt wird. Dadurch werden die Glaskörper im Verlaufe der einzelnen Kühlzonen einerseits durch die vorbeistreichende Luft gekühlt, und andererseits wird die an den noch heißen Glaskörpern vorbeistreichende Luft erwärmt. In einer Zwischenstufe kann man durch zusätzliche Einwirkung von Brennerflammen höhere Temperaturen erreichen oder durch Einblasen von kalter Luft Temperaturabsenkungen hervorrufen.

Die Vorrichtung zur Erhöhung der Festigkeit von Glaskörpern, die erwärmt und danach abgekühlt werden, weist ein durch einen länglichen Brennofen geführtes Transportband, wenigstens drei hintereinander angeordnete Heizzonen und anschließend hintereinander angeordnete Kühlzonen und Einrichtungen für die Zufuhr von Heizluft und von Kühlluft sowie Abluftanschlüsse auf. Um eine solche Vorrichtung zur Lösung der vorstehen genannten Aufgabe zu ändern, ist erfindungsgemäß vorgesehen, daß zwischen der letzten Heizzone und der ersten Kühlzone eine Thermoschleuse eingebaut ist, die eine wärmedämmende, bewegbar angetriebene Klappe und wenigstens eine Kühlluftzuführleitung aufweist und daß das Transportband intermittierend angetrieben ist. Als Transportband nimmt man vorzugsweise ein Drahtgliederband, auf welches die Glaskörper in bestimmeten Gruppen bzw. Paketen bestimmter Größe aufgestellt und für die intermittierende Bewegung befestig werden. Die erhitzten Heißluft wird bei einer solchen Vorrichtung mit Vorteil von unten durch das Transportband und an den Glaskörpern vorbeigedrückt, weil dadurch eine intensive und gleichmäßige Erwärmung des Glaskörpers erreicht wird. Die als Thermoschock wirkende Abkühlung des zu behandelnden Glaskörpers erreicht man mit der erfindungsgemäßen Vorrichtung durch die erwähnte Thermoschleuse, welche zwischen der letzten Heizzone und der ersten Kühlzone angeordnet ist. Eine wärmedämmende Klappe kann von außerhalb des Brennofens angeordneten Antriebs- und Steuereinrichtung so bewegt werden, daß eine gewisse Temperaturisolierung zwischen der letzten Heizzone und der ersten Kühlzone (im Sinne der Transportrichtung) erreicht wird. Hierfür hilft die gruppenweise Anordnung der Glaskörper, die im Abstand voneinander -in Förderrichtung gesehen- so angeordnet sind, daß z.B. die Klappe in den Raum zwischen zwei Glaskörpergruppen einfährt und damit eine Wärmedämmung zwischen den beiden hintereinander angeordneten Gruppen von Glaskörpern bewirkt. Es versteht sich, daß das Hereinfahren einer Klappe einer solchen Thermoschleuse nur beim Stillstand des Transportbandes vorgenommen wird. Es werden bei dessen intermittierender Bewegung hier die Ruhezeiten ausgenutzt. Die Abkühlung gelingt mit der erfindungsgemäßen Vorrichtung durch das Einleiten von Kühlluft in die erste Kühlzone. Abluftanschlüsse hinter der Thermoschleuse sorgen für die Abnahme ausreichender Mengen Luft an anderer Stelle, wenn an der Stelle der Thermoschleuse zum Kühlen große Luftmengen eingeführt werden.

Die Anordnung von Zufuhrleitungen für Heißluft und/oder Kühlluft und andereseits Abluftleitungen an anderen Stellen erlaubt das Erreichen unterschiedlicher Temperaturprofile längs des Brennerofens, d.h. in den einzelnen Heiz- und Kühlzonen, so daß man unterschiedliches Brenngut fahren kann, z.B. schweres Glas oder leichte Glaskörper.

Bei einer ausgesuchten, beispielhaften Ausführungsform erreicht man das Aufschmelzen der keramischen Farben des Dekors bei einer Temperatur des Glaskörpers von etwa 600°C, und die Verfestigung des Glases erreicht man durch einen Temperatursturz in der Temperaturschleuse von etwa 475°C, wobei dieser Temperatursturz auf einer Länge von z.B. nur 30 cm erfolgt, während bei diesem Beispiel der gesamte Brennofen eine Länge von etwa 24 m hatte. Schon am Ende der ersten Kühlzone sank die Temperatur des Glaskörpers in seiner Oberfläche auf etwa 125°C, was für den Glaskörper einen Thermoschock bedeutet und die beschriebene Druckspannung außen und Zugspannung im Inneren des Glaskörpers bewirkt, wodurch die erwünschte Festigkeitssteigerung erreicht werden kann.

Mit einer solchen Vorrichtung mit Thermoschleuse und richtiger Einstellung des Temperaturprofiles kann man einerseits die Festigkeit der Gläser erhöhen und gelichzeitig ein Dekor auf ihrer Oberfläche einbrennen. Die für die Festigkeitserhöhung notwendige Energie wird mit Vorteil gleichzeitig auch für das Einbrennen des Dekors verwendet Die Endprodukte sind mechanisch stoßfest und haben eine höhere Schlagbelastung als herkömmliche Gläser. Bei der erwähnten beispielsweise ausgesuchten Vorrichtung hat man das Transportband mit einer Geschwindigkeit von 60 cm pro Minute um Schritte von etwa 1,40 m jeweils 3 Minuten lang bewegt und 5 Minuten lang im Stillstand belassen, weil dadurch eine intensive und gleichmäßige Durchwärmung des Glaskörpers erfolgte. Damit erreichte man gut entspanntes Glas, das mit dem erfindungsgemäßen Verfahren in überraschender Weise gebrauchsfester und härter gemacht werden konnte. Der Endverbraucher hat eine erstaunliche Stabilisierung der jeweiligen Glaskörper nach dem erfindungsgemäßen Verfahren, d.h. nach Durchlaufen der beschriebenen Vorrichtung, festgestellt.

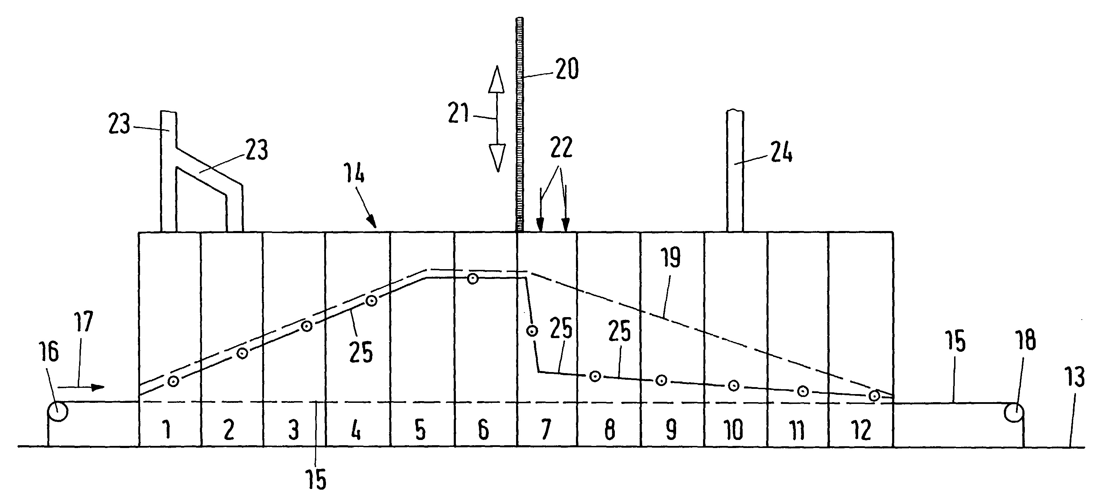

Weitere Vorteile, Merkmale und Anwendungsmöglichkeiten der vorliegenden Erfindung ergeben sich aus der folgenden Beschreibung eines bevorzugten Ausführungsbeispieles in Verbindung mit der anliegenden einzigen Zeichnung.

Auf dem schematisch unten dargestellten Boden 13 steht ein in der Figur schematisch angedeuteter und von der Längsseite gezeigter, allgemein mit 14 bezeichneter Brennofen. Er weist sechs Heizzonen 1 bis 6 und anschließend sechs weitere Kühlzonen auf, die in der Technik auch als Schüsse bezeichnet werden. Ein Transportband 15 läuft am vorderen Ende (in der Zeichnung links) über die eingangsseitige Walze 16 in Transportrichtung (Pfeil 17) geradlinig horizontal in den Brennofen 14 ein und verläßt diesen auf der in der Zeichnung rechten Seite an dessen Ende, um über die Umlenkwalze 18 abgeführt zu werden. Dieses Transportband 15 in Gestalt des Drahtgliederbandes ist je nach Wunsch mit Glaskörpern bestückbar, die in unterschiedliche Raster gesetzt werden können, beispielsweise in einer Tiefe von 1,40 m und Breite von 2,50 m. Solche Pakete oder Gruppen von Glaskörpern werden mit dem Transportband 15 dann intermittierend durch den länglichen Brennofen 14 gefördert.

Die gestrichelte Linie in den einzelnen Zonen 1 bis 12 zeigt den Ofentemperaturverlauf eines normalen Dekoreinbrandes. Diese Linie für den Temperaturverlauf ist mit 19 bezeichnet. Bei den Stufen 1 bis 6 handelt es sich um Heizstufen, deren Temperatur sich jeweils um etwa 100°C von der Nachbarschaft unterscheidet. So werden die nicht dargestellten Glaskörper beim Eintritt in die Heizzone 1 auf etwa 200°C, beim Eintreten in die Heizzone 2 auf etwa 280°C, in der Heizzone 3 auf 380°C, in der Heizzone 4 auf etwa 480°C und in der Heizzone 5 auf etwa 580°C erwärmt, während in der letzten Heizzone 6 ein weiteres Einwirken der Endtemperatur besorgt wird, um sicherzustellen, daß der Glaskörper gleichmäßig durchwärmt ist und spannungsfrei wird.

Am Ende der letzten Heizzone 6 ist oberhalb deren Endwand schematisch eine Temperaturschleuse 20 in Form eines dicken Striches dargestellt, um z.B. eine in Richtung des Doppelpfeiles 21 vertikal auf- und abbewegbare Klappe darzustellen. Die Gruppen von Glaskörpern befinden sich in Transportrichtung 17 in solchen Abständen voneinander, daß 30 cm bis 50 cm Raum auf dem Drahtgliederband ohne Glaskörper zwischen zwei aufeinander folgenden Gruppen vorhanden ist. In diesen Raum kann die Thermoschleuse 20 mit ihrer Klappe eingreifen, so daß auf diese Weise die von der letzten Heizzone 6 aus wirkende Wärme bei eingefahrener und geschlossener Thermoschleuse gegen ein Eindringen in die erste Kühlzone 7 gehindert oder mindestens gedämmt wird.

Die Kühlung erfolgt durch die Zufuhr von Kühlluft, die im Bereich der ersten Kühlzone 7 durch die beiden Pfeile 22 dargestellt ist. Es versteht sich, daß hierfür geeignete Zuführleitungen vorgesehen sind. Die Drift der Luft vom rechten Ende des Brennofens 14 nach links ist hier nicht weiter dargestellt. Man sieht aber die Abluftanschlüsse 23 am vorderen Ende des Brennofens 14, das heißt oben im Bereich der Heizzonen 1 und 2. Der Fachman weiß, daß die Farben der Dekore einen gewissen Anteil von Harz oder Phenol haben, um z.B. die Farben auf dem Glas zu halten, und diese Phenole dampfen in der ersten und der zweiten Heizzone ab und werden über die Abluftanschlüsse 23 abgesaugt. Auch überschüssige Luft wird damit abgesaugt. Auf diese Weise kann man ein gutes Gleichgewicht von zu- und abströmender Luft bei gleichzeitiger Erreichung eines geeigneten Temperaturverlaufes erhalten.

Etwa im mittleren Bereich der Kühlzonen, z.B. über der Kühlzone 10 ist ein weitere Abluftanschluß 24 dargestellt.

Durch die Zufuhr von Kühlluft an der mit 22 bezeichneten Stelle oben in die erste Kühlzone 7 nach unten hinein ist eine drastische Änderung des Brennofens 14 gegenüber älteren Einrichtungen geschaffen, so daß eine Abweichung von der gestrichelt gezeichneten Temperaturkurve 19 erreicht werden kann.

Zwischen der letzten Heizzone 6 und der ersten Kühlzone 7 ist bei der hier dargestellten bevorzugten Ausführungsform der Vorrichtung die Thermoschleuse 20 in Form der vertikal (Doppelfpeil 21) bewegbaren Klappe gezeigt. Diese erlaubt in Verbindung mit den Kühlluftzufuhrleitungen 22 oben an der ersten Kühlzone 7 eine drastische Temperaturabsenkung, so daß sich ein Ofentemperaturverlauf 25 ergibt, wie er durch die mit Kreispunkten versehene zweite Linie dargestellt ist, die sich in der Zeichnung unterhalb der gestrichelten Linie 19 befindet.

Zur Durchführung des eingangs beschrieben Verfahrens werden die unter dem Brennofen 14 angeordneten und nicht gezeichneten Brenner so eingeregelt, daß Heizluft in den Heizzonen 1 bis 6 einen Temperaturanstieg wie im Falle des Dekoreinbrennens bewirkt. In beiden Fällen steigt die Temperatur von der ersten Heizzone von etwa 200°C auf 280°C in der zweiten Heizzone u.s.w. bis etwa 600 °C in der fünften und sechsten Heizzone. Das Transportband 15 bewegt sich intermittierend, wobei die Stillstandszeiten länger sind als die Bewegungszeiten des Transportbandes 15. Während der jeweiligen Stillstandszeit ist die Klappe der Thermoschleuse 20 zur Wärmedämmung in den Brennofen heruntergefahren, so daß die Wärme aus der letzten Heizzone 6 nicht in die erste Kühlzone ungehemmt eindringen kann. Gleichzeitig wird über die oben schematisch angedeuteten Kühlluftzufuhrleitungen 22 Kühlluft in einer solchen Menge eingeblasen, daß ein Temperatursturz in der ersten Kühlzone 7 von etwa 600°C auf etwa 125°C oder niedriger erreicht wird. Dadurch kühlt sich das in diesem Augenblick in der ersten Kühlzone 7 befindliche Gut (Glaskörper) um eine Temperaturdifferenz von etwa 475°C ab, was man durchaus als Thermoschock bezeichnen kann. Hierdurch erfolgt die festigkeitssteigernde Wirkung. Danach in den folgenden Kühlzonen 8 bis 10 oder 11 hat die Temperatur praktisch freien Lauf und kühlt sich von den erwähnten 125°C bei diesem Beispiel auf Raumtemperatur in der Kühlzone 11, spätestens aber in der Kühlzone 12 ab.

Bei jedem Weiterschalten des intermittierend bewegten Transportbandes 15 wird zuvor die Klappe der Thermoschleuse 20 aus dem Bewegungsweg der Glaskörper herausgezogen, wonach das Umsetzen erfolgt und die Thermoschleuse 20 danach wieder in Funktion gebracht wird, so daß in den Stillstandszeiten immer die thermische Trennung zwischen der letzten Heizzone 6 und der ersten Kühlzone 7 gewährleistet ist.

## Patentansprüche

1. Verfahren zur Erhöhung der Festigkeit von Glaskörpern, die erwärmt und danach abgekühlt werden, **dadurch gekennzeichnet,** daß der jeweilige Glaskörper mit aufgebrachtem Dekor intermittierend in wenigstens drei Stufen (1-3) auf eine über der Entspannungstemperatur T_{g} liegende Temperatur von zwischen 550°C bis 650°C erwärmt wird, so daß die Keramikfarbe oder Siebdruckfarbe des Dekors homogen mit dem Glas verbunden ist und das Glas vorzugsweise im wesentlichen spannungsfrei ist, und der Glaskörper danach auf einer Stufe (7) um eine Temperaturdifferenz aus dem Bereich von 200°C bis 600°C, vorzugsweise von 300°C bis 500°C und besonders bevorzugt von 420°C bis 480°C derart abgekühlt wird, daß die Temperatur des Glaskörpers nach der Abkühlung jedenfalls unter der Entspannungstemperatur T_{g} liegt, wobei die Abkühlung als Thermoschock innerhalb höchstens 30 Minuten, vorzugsweise binnen höchstens 20 Minuten erfolgt und wobei die Erwärmungstemperatur und die Temperaturdifferenz so aufeinander abgestimmt werden, daß eine Erhöhung der Festigkeit erfolgt.

2. Verfahren nach Anspruch 1, **dadurch gekennzeichnet,** daß die Glaskörper gruppenweise in Förderrichtung (17) mit Abständen zwischen den Gruppen, mit einer Geschwindigkeit von 20 cm pro Minute bis 120 cm pro Minute, vorzugsweise von 40 cm pro Minute und 80 cm pro Minute, durch Heiz- (1-6) und Kühlzonen (7-12) gefördert werden.

3. Verfahren nach Anspruch 1 oder 2, **dadurch gekennzeichnet,** daß der jeweilige Glaskörper in sechs aufeinanderfolgenden Heizzonen (1-6), vorzugsweise durch Heißluft, auf etwa 600°C erwärmt, in einer Hauptkühlzone (7) auf 120°C bis 150°C in etwa 15 Minuten und in fünf weiteren Kühlzonen (8-12), vorzugsweise durch Kühlluft, allmählich auf etwa Raumtemperatur abgekühlt wird.

4. Vorrichtung zur Erhöhung der Festigkeit von Glaskörpern, die erwärmt und danach abgekühlt werden, mit einem durch einen länglichen Brennofen (14) geführten Transportband (15), mit wenigstens drei hintereinander angeordneten Heizzonen (1-6) und anschließend hintereinander angeordneten Kühlzonen (7-12) mit Einrichtungen (22, 24) für die Zufuhr von Heißluft und/oder von Kühlluft und mit Abluftanschlüssen (23, 24), **dadurch gekennzeichnet,** daß zwischen der letzten Heizzone (6) und der ersten Kühlzone (7) eine Thermoschleuse (20) eingebaut ist, die eine wärmedämmende, bewegbar angetriebene Klappe und wenigstens eine Kühlluftzufuhrleitung (22) aufweist und daß das Transportband (15) intermittierend angetrieben ist.

## Claims

1. A method of increasing the strength of glass bodies which are heated and thereafter cooled, characterised in that the respective glass body with decoration applied thereto is heated intermittently in at least three stages (1-3) to a temperature of between 550°C and 650°C, which is above the relief temperature T_{g}, so that the ceramic ink or screen printing ink of the decoration is homogeneously bonded to the glass and the glass is preferably substantially stress-free, and the glass body is thereafter cooled in a stage (7) by a temperature difference from the range of 200°C to 600°C, preferably 300°C to 500°C and particularly preferably 420°C to 480°C, in such a way that after the cooling operation the temperature of the glass body is at any event below the relief temperature T_{g}, wherein the cooling operation is effected as a thermal shock within at most 30 minutes, preferably inside at most 20 minutes, and wherein the heating temperature and the temperature difference are so matched to each other that an increase in strength occurs.

2. A method according to claim 1 characterised in that the glass bodies are conveyed group-wise in the conveyor direction (17) with spacings between the groups, at a speed of 20 cm per minute to 120 cm per minute, preferably 40 cm per minute and 80 cm per minute, through heating zones (1-6) and cooling zones (7-12).

3. A method according to claim 1 or claim 2 characterised in that the respective glass body is heated in six successive heating zones (1-6), preferably by hot air, to about 600°C, and cooled in a main cooling zone (7) to 120°C to 150°C in about 15 minutes and gradually cooled to about ambient temperature in five further cooling zones (8-12), preferably by cooling air.

4. Apparatus for increasing the strength of glass bodies which are heated and thereafter cooled, comprising a conveyor belt (15) which is passed through an elongate furnace (14), at least three successively arranged heating zones (1-6) and subsequently successively arranged cooling zones (7-12) with devices (22, 24) for the feed of hot air and/or cooling air and with exhaust air connections (23, 24), characterised in that installed between the last heating zone (6) and the first cooling zone (7) is a thermal lock device (20) which has a heat-insulating, movably driven flap and at least one cooling air feed conduit (22) and that the conveyor belt (15) is driven intermittently.

## Revendications

1. Procédé pour augmenter la résistance mécanique d'objets en verre, qui subissent un échauffement puis un refroidissement, caractérisé en ce que l'objet en verre, portant un décor, est chauffé par intermittence dans au moins trois étages (1-3) à une température comprise entre 550 et 650°C, et supérieure à la température de recuit T_{g}, de façon que la couleur céramique ou la couleur pour impression sérigraphique du décor soit assemblée d'une manière homogène au verre, et que le verre soit de préférence pour l'essentiel sans contraintes, puis l'objet de verre, dans un étage (7), est refroidi sur une différence de température comprise entre 200 et 600°C, de préférence entre 300 et 500°C et plus particulièrement entre 420 et 480°C, de telle sorte que la température de l'objet en verre soit dans tous les cas, après refroidissement, inférieure à la température de recuit T_{g}, le refroidissement étant réalisé sous forme d'un choc thermique en au plus 30 minutes, de préférence en au plus 20 minutes, et la température d'échauffement et la différence de température étant adaptées l'une à l'autre de façon qu'il en résulte une augmentation de la résistance mécanique.

2. Procédé selon la revendication 1, caractérisé en ce que les objets en verre se déplacent par groupes, dans la direction d'avancement (17), à travers les zones de chauffage (1-6) et de refroidissement (7-12), avec des écartements entre les groupes, et une vitesse de 20 à 120 cm par minute et de préférence de 40 à 80 cm par minute.

3. Procédé selon la revendication 1 ou 2, caractérisé en ce que chaque objet en verre est chauffé à environ 600°C dans six zones de chauffage (1-6) successives, de préférence grâce à de l'air chaud, et, dans une zone principale de refroidissement (7), est refroidi à une température de 120 à 150°C en environ 15 minutes, et, dans cinq autres zones de refroidissement (B-12), est progressivement refroidi, de préférence à l'aide d'air de refroidissement, approximativement à la température ambiante.

4. Equipement pour augmenter la résistance mécanique d'objets en verre, qui subissent un chauffage, puis un refroidissement, comportant une bande transporteuse (15), qui traverse un four de cuisson (14) de grande longueur, au moins trois zones de chauffage (1-6) disposées l'une derrière l'autre, suivies de zones de refroidissement (7-12) disposées l'une derrière l'autre, avec des dispositifs (22, 24) destinés à amener de l'air chaud et/ou de l'air de refroidissement, ainsi que des raccordements (23, 24) pour l'air d'évacuation, caractérisé en ce qu'entre la dernière zone de chauffage (6) et la première zone de refroidissement (7) est inséré un sas thermique (20), qui comporte un clapet calorifuge, entraîné d'une manière mobile, et au moins une conduite (22) d'amenée d'air de refroidissement, et en ce que la bande transporteuse (15) est entraînée d'une manière intermittente.
